# EUROPÄISCHE PATENTSCHRIFT

(11) **EP 2 197 748 B1**
(45) Veröffentlichungstag und Bekanntmachung des Hinweises auf die Patenterteilung: **19.10.2011**
(21) Anmeldenummer: 08783486.7
(22) Anmeldetag: 16.09.2008
(51) Int. Cl.: B65B 25/14, B65B 51/30, B65B 51/16

(54) **VORRICHTUNG ZUR BEARBEITUNG VON FLACHEN GEGENSTÄNDEN, INSBESONDERE DRUCKEREI PRODUKTEN**
DEVICE FOR PROCESSING FLAT OBJECTS, IN PARTICULAR PRINT SHOP PRODUCTS
DISPOSITIF DE TRAITEMENT D'ARTICLES PLATS, NOTAMMENT DE PRODUITS D'IMPRIMERIE

(30) Priorität: 25.09.2007 CH 14922007
(43) Veröffentlichungstag der Anmeldung: 23.06.2010
(73) Patentinhaber: Ferag AG, 8340 Hinwil (CH)
(72) Erfinder: DAX, Roman, 8344 Bäretswil (CH); LUGINBÜHL, Thomas, 6438 Ibach (CH)
(74) Vertreter: Frei Patent Attorneys
(86) Internationale Anmeldenummer: PCT/CH2008/000387
(87) Internationale Veröffentlichungsnummer: WO 2009/039673

(56) Entgegenhaltungen:
- EP-A- 0 308 861
- EP-A- 0 855 341
- EP-A- 1 810 922
- US-A- 5 337 542

## Beschreibung

Die Erfindung liegt auf dem Gebiet der Förder- und Verpackungstechnik und betrifft eine Vorrichtung zum Bearbeiten von kontinuierlich geförderten flachen Produkten, insbesondere Druckereiprodukten, und/oder einer kontinuierlich bewegten, quasi endlosen Materialbahn, insbesondere einer Folienbahn, gemäss dem Oberbegriff von Anspruch 1.

Bei der Bearbeitung von Produkten in einem Förderstrom werden einerseits hohe Verarbeitungsgeschwindigkeiten und einfache, verschleissarme, wenig fehleranfällige Konstruktion der mechanischen Komponenten, andererseits eine präzise Kontrolle der Bewegung der Werkzeuge und der Produkte sowie eine möglichst lange Bearbeitungszeit gefordert. Die meisten Prozesse zur Bearbeitung von Produkten bzw. einer Materialbahn, z.B. Schweissen, Schneiden, Bedrucken, erfordern auch einen gewissen Gegendruck bzw. Widerstand durch ein Gegenwerkzeug, das mit dem eigentlichen Werkzeug zusammenwirkt. Einzelne dieser Vorgaben werden auf unterschiedliche Weise erfüllt.

Eine Bewegung der Werkzeuge entlang einer Kreisbahn ist mechanisch einfach zu realisieren und wird in der Regel bevorzugt. Derartige Vorrichtungen mit durch Drehung eines starren Körpers entlang von Kreisbahnen bewegten Schweisswerkzeugen sind beispielsweise aus EP-A 1 362 790, WO 00/35757 oder WO-A 2005/118402 bekannt Während bei der EP-A 1 362 790 oder WO-A 2005/118402 die Werkzeuge stets in radiale Richtung orientiert sind, wird die Orientierung der Werkzeuge bei der WO 00/35757 konstant gehalten, indem die Werkzeuge drehbar am Drehkörper befestigt sind und während seiner Drehung in gegenläufigem Sinn synchron umlaufen.

Bei der Vorrichtung gemäss WO 00/35757 hängt die Position der bearbeitungsaktiven Zone des Werkzeugs, also desjenigen Teils, der mit dem Produkt oder der Materialbahn zusammenwirkt, wegen des Abstands von der Schwenkachse stark von der Qualität der Synchronisation der Gegendrehung des Werkzeugs mit der Drehbewegung des Drehkörpers ab. Falls hierzu Führungskulissen verwendet werden, müssen diese sehr präzise geformt sein.

Die Vorrichtungen gemäss EP-A 1 362 790 und WO 00/35757 umfassen synchron mit dem eigentlichen Werkzeug bewegte Gegenwerkzeuge, die ebenfalls auf einer Kreisbahn umlaufen. Zur Verlängerung der Bearbeitungsdauer und damit des Bearbeitungsbereichs schneiden sich die im unbelasteten Zustand kreisförmigen Bewegungsbahnen von Werkzeug und Gegenwerkzeug. Indem die Werkzeuge relativ zum Drehkörper federnd gelagert sind, wird die Umlaufbahn des Werkzeugs durch den Gegendruck des jeweils anderen Werkzeugs abgeflacht und der Bearbeitungsbereich so verlängert. Die Kräfte, die hierbei auf die Werkzeuge wirken, können jedoch zu Verschleiss führen**.**

In der nicht vorveröffentlichten internationalen Patentanmeldung Nr. PCT/CH2007/000130 wird als Alternative zur reinen Kreisbahn vorgeschlagen, das Werkzeug über einen Hebelarm derart schwenkbar mit dem Tragarm zu verbinden, dass die bearbeitungsaktive Zone einen Abstand von der Schwenkachse und damit je nach Schwenkposition einen variablen Abstand vom Drehzentrum aufweist. Die Schwenkposition wird mit einem mit einer Steuerkulisse zusammenwirkenden Steuerelement eingestellt, das sich im Bereich der bearbeitungsaktiven Zone und damit ebenfalls in einem Abstand von der Schwenkachse befindet. Auf diese Weise kann eine von einer reinen Kreisbahn abweichende Umlaufbahn der bearbeitungsaktiven Zone erzeugt werden, insbesondere eine mit einem geraden Teilstück zur Verlängerung des Bearbeitungsbereichs. Durch ein zweites Steuerelement und eine zweite Steuerkulisse kann auch die Orientierung im Raum eingestellt werden. Bei dieser Vorrichtung hängt die genaue Lage der bearbeitungsaktiven Zone und ihre Orientierung und Geschwindigkeit beim Durchlaufen des Bearbeitungsbereichs stark von der Genauigkeit der Steuerkulisse ab. Die Steuerkulisse muss die Bewegungsbahn der Steuerelemente daher innerhalb relativ enger Grenzen vorgeben, z.B. wenn die Orientierung konstant gehalten werden soll. Dies kann zu Problemen führen, wenn beispielsweise unterschiedlich dicke Produkte bearbeitet werden. Ausserdem müssen die bei der Bearbeitung herrschenden Kräfte über die Steuerelemente und Steuerkulissen aufgenommen werden. Hierbei entstehen unerwünschte Drehmomente.

Eine Vorrichtung zum Verschweissen einer Materialbahn ohne ein umlaufendes Gegenwerkzeug ist aus der WO-A 2005/118402 bekannt. Die Vorrichtung umfasst mehrere an einem Rad angeordnete Schweisswerkzeuge, die stets in radiale Richtung orientiert sind und daher wieder eine Kreisbahn beschreiben. Unterhalb des Rades befindet sich ein Förderband, mit dem eine Materialbahn sowie durch die Materialbahn zu umhüllende Produkte in den Bearbeitungsbereich der Schweisswerkzeuge gefördert werden. Das Förderband wirkt als Gegenwerkzeug und übt den Widerstand, der für die Bearbeitung notwendig ist, selbst aus. Jeder einzelne Punkt auf dem Förderband bewegt sich zwar, das Förderband als Ganzes ändert jedoch seine Lage relativ zum Schweisswerkzeug nicht, so dass Synchronisationsprobleme entfallen.

Bei der Schweissvorrichtung gemäss WO-A 2005/118402 ist die rein kreisförmige Umlaufbahn der Werkzeuge und ihrer bearbeitungsaktiven Zonen, hier die heisse Schweisszone (Schweissbalken) von Schweisswerkzeugen, so angeordnet, dass sie die durch die Oberseite des unbelasteten Förderbands definierte Förderebene unterschneidet. Das um zwei stationäre Rollen geführte Förderband ist dazu mehrlagig und senkrecht zur Bandebene kompressibel ausgebildet: Dem Werkzeug zugewandt ist eine feste, thermisch gut isolierende, reibungsverminderne Tragschicht, die z.B. teflonbeschichtet ist, gefolgt von einer Dämpfungsschicht, z.B. kompressiblen Schaumstoff, und einem Basismaterial. Die Tragschicht wird daher durch den Druck des Werkzeugs leicht nach unten ausgelenkt, und die Dämpfungsschicht wird komprimiert. Kleine Unterschneidungen der Förderebene durch die Werkzeuge in der Grössenordnung von einigen Millimetern können durch diese Dämpfungsschicht kompensiert werden. Eine Kontrolle der Orientierung der Schweisswerkzeuge ist bei der Vorrichtung gemäss WO-A 2005/118402 jedoch nicht möglich.

Der Erfindung liegt daher die Aufgabe zugrunde, die oben geschilderten Probleme des Standes der Technik zu vermindern und insbesondere für eine präzise kontrollierbare Positionierung der bearbeitungsaktiven Zone der Werkzeuge im Bearbeitungsbereich zu sorgen.

Die Aufgabe wird gelöst durch eine Bearbeitungsvorrichtung mit den Merkmalen von Anspruch 1. Vorteilhafte Weiterbildungen ergeben sich aus den abhängigen Ansprüchen, der Beschreibung und den Zeichnungen.

Die erfindungsgemässe Vorrichtung dient zur Bearbeitung von nacheinander in einer Förderrichtung geförderten flachen Gegenständen, insbesondere Druckereiprodukten, und/oder einer kontinuierlich geförderten Materialbahn. Eine bevorzugte Anwendung ist das Verschweissen einer Folienbahn zum Verpacken von Produkten. Andere Anwendungen sind möglich, z.B. Bedrucken, Schneiden, Auftragen von Klebstoff, Anbringen von Ergänzungsprodukten.

Die Vorrichtung umfasst wenigstens einen um eine Drehachse drehbaren starren Körper, z.B. ein Rad oder einen Tragarm, und wenigstens ein an diesem Körper befestigtes, durch Drehung des Körpers entlang einer Umlaufbahn bewegbares Werkzeug mit einer bearbeitungsaktiven Zone. Es handelt sich insbesondere um ein Schweisswerkzeug mit einem Schweissbalken als bearbeitungsaktive Zone. Das Werkzeug ist um eine Schwenkachse schwenk- oder drehbar am Körper befestigt, wobei die Schwenkposition des Werkzeugs mittels einer ortsfesten Steuerkulisse und einem mit der Steuerkulisse zusammenwirkenden, mit dem Werkzeug verbundenen Steuerelement in Abhängigkeit von der Drehlage des starren Körpers einstellbar ist. Erfindungsgemäss hat die Schwenkachse einen konstanten Abstand von der Drehachse und die bearbeitungswirksame Zone des Werkzeugs ist auf der Schwenkachse angeordnet, wobei das Steuerelement von der bearbeitungswirksamen Zone beabstandet ist. Diese Konstruktion hat den Vorteil, dass die räumliche Lage der bearbeitungswirksamen Zone zu jedem Zeitpunkt genau bekannt ist, denn die bearbeitungswirksame Zone befindet sich stets auf einer Kreisbahn, deren Radius dem Abstand der Schwenkachse vom Drehzentrum entspricht.

Dennoch kann die Orientierung der bearbeitungswirksamen Zone mit Hilfe des Steuerelements und der Steuerkulisse genau eingestellt werden. Da das Steuerelement von der Schwenkachse beabstandet ist, führt eine Änderung seiner Lage zu keiner oder im Vergleich dazu sehr kleiner Orientierungsänderung der bearbeitungswirksamen Zone ohne gleichzeitige Positionsänderung relativ zum zu bearbeitenden Produkt. Um eine geforderte Genauigkeit zu erreichen, ist daher bei der Ausgestaltung und Positionierung der Steuerkulisse weniger Aufwand als bisher notwendig.

Da die bearbeitungsaktive Zone direkt am starren Körper, z.B. am Tragarm, und nicht an einem in Umfangsrichtung abstehenden Hebelarm gelagert ist, wird die bei der Bearbeitung aufzubringende Kraft in radialer Richtung abgeleitet. Die Kraft wird damit direkt vom starren Körper über dessen Drehzentrum aufgenommen. Es entsteht kein Drehmoment, das aufgenommen und kompensiert werden muss. Dies trägt ebenfalls zur Erhöhung der Bearbeitungsqualität sowie zur Stabilität der Vorrichtung bei.

Bevorzugt ist die Steuerkulisse so ausgebildet, dass die Ausrichtung des Werkzeugs im Raum zumindest in einem Teilbereich der Umlaufbahn, insbesondere im sowie vor und nach dem Bearbeitungsbereich, im wesentlichen konstant ist. Dies hat vor allem beim Schweissen Vorteile, da der Schweissbalken senkrecht zwischen zwei Produkte einstechen und auf die Materialbahn treffen kann.

Die Vorrichtung lässt sich mit einem bewegten Gegenwerkzeug einsetzen, das z.B. an einer komplementär ausgestalteten Gegenvorrichtung angebracht ist. Dies ist vor allem bei Schneidwerkzeugen, die ein Gegenmesser erfordern, von Vorteil.

In einer bevorzugten Weiterbildung der Erfindung wird der zur Bearbeitung notwendige Gegendruck jedoch durch das Förderband einer Fördereinrichtung ausgeübt, ohne dass ein separates Gegenwerkzeug vorhanden ist. Das Förderband hat dazu an die Bearbeitung angepasste mechanische Eigenschaften, z.B. Festigkeit, Hitzebeständigkeit, geringe Reibung.

Die Vorrichtung umfasst dazu eine Fördereinrichtung zur Förderung der Gegenstände oder Materialbahn. Die Fördereinrichtung weist wenigstens ein umlaufend angetriebenes Trägerband und Umlenkmittel zu dessen Umlenkung auf. Eine Förderauflage für die Produkte bzw. die Materialbahn ist durch eine dem wenigstens einen Werkzeug zugewandte Aussenfläche des Trägerbands gebildet. Diese Förderauflage wirkt im Bearbeitungsbereich als Gegenwerkzeug direkt oder indirekt (d.h. über das Produkt bzw. die Materialbahn) mit dem Werkzeug zusammen, indem sie dem Werkzeug einen gewissen, für die Bearbeitung notwendigen Bearbeitungsdruck bzw. Widerstand entgegensetzt.

Der Vorteil einer solchen Vorrichtung ist der geringe Platzbedarf und fehlende Notwendigkeit der Synchronisation mit einem Gegenwerkzeug. Ausserdem ist das Produkt zu jedem Zeitpunkt vollständig durch das Trägerband abgestützt. Dies ermöglicht eine präzise Förderung und Bearbeitung auch bei hohen Bearbeitungsgeschwindigkeiten.

Ein bisher ungelöstes Problem bei einem als Ganzes ortsfesten Gegenwerkzeug wie z.B. einem Förderband sind grössere Auslenkungen des Förderbands, die direkt oder indirekt durch die Werkzeuge hervorgerufen werden, z.B. wenn diese wegen einer Ungenauigkeit in der Zulieferung auf ein Produkt statt zwischen die Produkte auftreffen. Bei einem steifen Förderband kann dies dazu führen, dass die Werkzeuge verklemmen oder beschädigt werden. Ein elastisches Förderband kann dies unter Umständen ausgleichen, dürfte aber die Anforderungen an eine präzise Zuführung der Produkte (kein Durchhängen) im Normalfall nicht erfüllen.

Zur Lösung dieses Problems ist in einer vorteilhaften Weiterbildung der Erfindung wenigstens eines der Umlenkmittel für das Trägerband federnd gelagert. Je nach Ausgestaltung der Federung können folgende Vorteile erzielt werden: Wenn diejenigen Umlenkmittel federnd sind, zwischen denen die Förderauflage aufgespannt wird, kann diese ihre Lage im Raum ändern und somit dem Werkzeug ausweichen, z.B. wenn dieses auf ein Produkt statt daneben drückt. Wenn die die Förderauflage aufspannenden Umlenkmittel fest sind, jedoch ein weiteres Umlenkmittel federnd, kann durch die Federung eine Auslenkung des Trägerbandes ausgeglichen werden. In beiden Fällen kann das Trägerband selbst daher verhältnismässig steif und fest sein. Dies ermöglicht die Realisierung einer auch unter Belastung gut definierten, weitgehend ebenen, nicht durchhängenden Förderauflage mit einfachen Mitteln. Das weitere Umlenkmittel spannt das Trägerband vorzugsweise nach aussen vor, um trotz der Steifheit des Trägerbandes eine ebene, nicht durchhängende Förderauflage zu erzielen.

In einer Weiterbildung der Erfindung ist die Förderfunktion der Fördereinrichtung von der Stützfunktion getrennt, indem eine zusätzliche Stützvorrichtung zumindest im Bearbeitungsbereich unterhalb der Förderauflage angeordnet ist. Diese Stützvorrichtung hat eine parallel zur Aussenfläche des Trägerbands verlaufende, unmittelbar an die Innenfläche des Trägerbands angrenzende Stützfläche, mit der das Trägerband stabilisiert wird. Somit wird unabhängig von den elastischen Eigenschaften des Trägerbands eine weitgehend ebene Förderfläche bereitgestellt. Das Trägerband selbst kann daher gegebenenfalls auch elastisch sein.

Besonders bevorzugt ist alternativ oder zusätzlich die Stützvorrichtung federnd gelagert, vorzugsweise derart, dass ein Verkippen der Stützfläche in und quer zur Förderrichtung möglich ist. Bevorzugt wird die Stützfläche nach Aussen gegen das Trägerband vorgespannt Die Federung ist so gestaltet, dass die Stützfläche auch beim Verkippen eben bleibt. Hierdurch wird erreicht, dass die Förderauflage einer Störung ausweichen kann, aber dabei eben bleibt.

Zur Verlängerung des Bearbeitungsbereichs bei der hier kreisförmigen Umlaufbahn der bearbeitungsaktiven Zone ist es von Vorteil, wenn die Umlaufbahn des Werkzeugs die Förderebene unterschneidet und das Trägerband oder die Stützvorrichtung eine komprimierbare Dämpfungsschicht aufweist, die die bei normaler Bearbeitung auftretende Auslenkung des Trägerbandes von üblicherweise 10-15 Millimetern aufnimmt.

Insbesondere wenn eine Dämpfungsschicht vorhanden ist, dient die federnde Lagerung der Förderauflage und/oder der Stützvorrichtung vor allem zum Ausgleich von Störungen, die zu einer Auslenkung der Förderauflage führen, die über das bei der normalen Bearbeitung übliche Mass hinausgeht.

Die erfindungsgemässe Vorrichtung wird bevorzugt zum Verschweissen einer Materialbahn eingesetzt, z.B. innerhalb einer Folierstrasse. Die Werkzeuge sind Schweisswerkzeuge mit einem Schweissbalken als bearbeitungsaktive Zone. Als Gegenwerkzeug wirkt das Trägerband einer Fördereinrichtung in Form eines Bandförderers. Auf eine Folienbahn aufgelegte Produkte werden von der Folienbahn umhüllt, und der so entstehende Folienschlauch wird anschliessend durch die Schweisswerkzeuge quer zur Förderrichtung verschweisst und bei der Schweissung durch Materialverdrängung getrennt, so dass zwei voneinander beabstandete Schweissnähte entstehen. Eine solche Bearbeitungsvorrichtung ist unten mit Bezug auf die Figuren näher erläutert.

Bevorzugt werden die Produkte mit einem Bandförderer an die oben erwähnte Fördereinrichtung zugeliefert. Es hat Vorteile, wenn die Förderebene der Fördereinrichtung relativ zu der Förderebene des Bandförderers schräggestellt ist und gegen oben verläuft. Dieses wird unten mit Bezug auf die Zeichnungen näher ausgeführt.

Bevorzugt ist eine auch Wegfördereinrichtung vorhanden, die in Förderrichtung nach der eigentlichen Bearbeitungsvorrichtung angeordnet ist. Diese kann die bearbeiteten Produkte bzw. die bearbeitete Materialbahn bevorzugt ergreifen, z.B. mittels Saugluft an ihrem Förderband fixieren. Die fördert vorzugsweise mit einer grösseren Fördergeschwindigkeit als die oben erwähnte Fördereinrichtung. Da die Schweisszone unmittelbar nach der Bearbeitung noch plastisch verformbar ist, können die folierten Produkte bei einer nicht optimalen Trennung auf diese Weise einfach durch Auseinanderziehen voneinander getrennt werden.

Beispiele der Erfindung sind in den Zeichnungen dargestellt und nachfolgend beschrieben. Es zeigen rein schematisch:
- Fig. 1: Eine Ansicht einer Bearbeitungsvorrichtung mit vier Tragarmen und daran angebrachten Schweisswerkzeugen;
- Fig. 2: eine Teilansicht einer Bearbeitungsvorrichtung zur Darstellung des Schweisswerkzeugs und des damit verbundenen Steuerelements zur Einstellung der Schwenkposition;
- Fig. 3: eine Seitenansicht einer Bearbeitungsvorrichtung mit einer Fördereinrichtung mit einem über hier drei Umlenkrollen umgelenkten Trägerband, wobei eine der Umlenkrollen gefedert gelagert ist im Normalzustand (durchgezogene Linien) sowie im Zustand besonderer Belastung (gestrichelt);
- Fig. 4: eine Seitenansicht einer Bearbeitungsvorrichtung wie in Fig. 3 mit einer unterhalb der Förderauflage angeordneten, gefedert gelagerten Stützvorrichtung im Normalzustand (durchgezogene Linien) sowie im Zustand besonderer Belastung (gestrichelt);
- Fig. 5: eine Seitenansicht einer Bearbeitungsvorrichtung wie in Fig. 4, wobei die Stützvorrichtung ein mit dem Trägerband mitlaufendes Stützband umfasst;
- Fig. 6: einen Ausschnitt aus einer Fördereinrichtung, deren Förderebene relativ zu der einer vorgelagerten Fördereinrichtung schräggestellt ist.

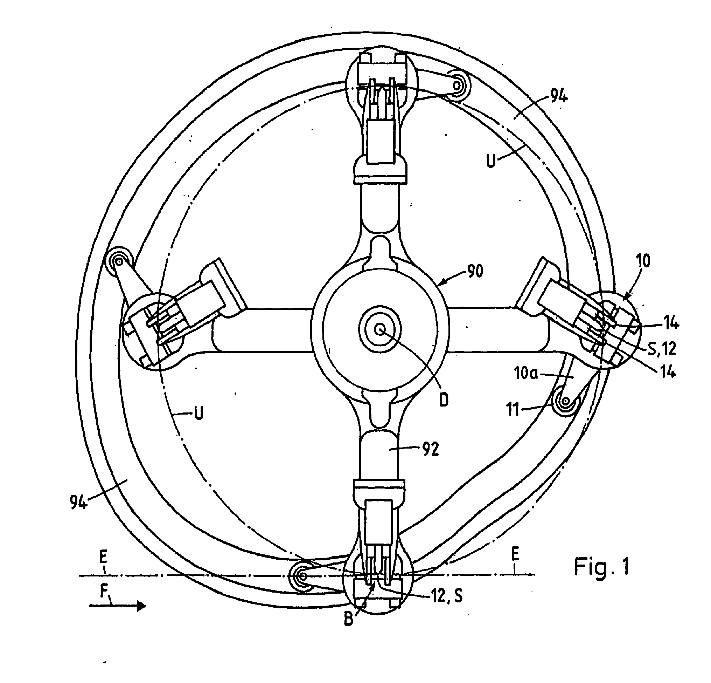

Fig. 1 zeigt eine Ansicht auf eine erfindungsgemässe Bearbeitungsvorrichtung mit einem um eine Drehachse D drehbaren starren Körper 90. Der Körper 90 hat vier Tragarme 92, an deren distalen Enden in konstantem Abstand von der Drehachse D jeweils ein Werkzeug 10 um eine Schwenkachse S schwenkbar angebracht ist. Der Winkel zwischen den Tragarmen 92 kann konstant sein. Bevorzugt ist, wenn die Tragarme einzeln oder paarweise (z.B. gegenüberliegende Tragarme 92) gesteuert relativ zueinander bewegbar sind, so dass die Bahngeschwindigkeit der Tragarme 92 entlang der Umlaufbahn U variiert werden kann. Die Werkzeuge 10 dienen zur Bearbeitung von Produkten bzw. einer Materialbahn, die in einer Förderebene E entlang einer Förderrichtung F an der Bearbeitungsvorrichtung vorbei gefördert werden.

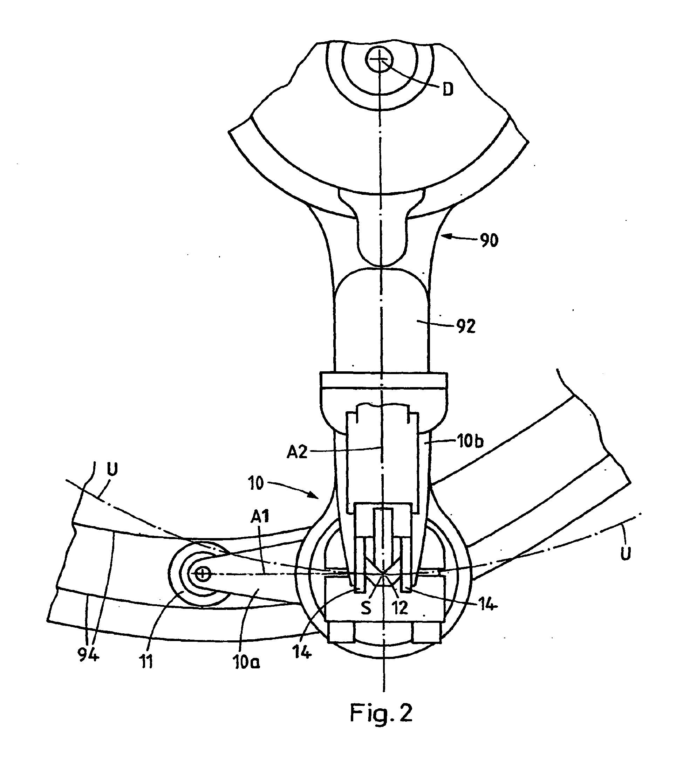

Die Werkzeuge 10 sind im Detail in Fig. 2 dargestellt. Es handelt sich um Schweisswerkzeuge mit einer bearbeitungswirksamen Zone 12 in Form eines Schweissbalkens und zwei seitlich davon angeordneten federnden Niederhaltern 14, wie z.B. in WO-A 2005/118402 beschrieben. Die Werkzeuge 10 umfassen zwei Arme 10a, 10b, deren Achsen A1, A2 einen festen Winkel von ca. 90° einschliessen.

Die Schwenkachse S befindet sich im Schnittpunkt der beiden Achsen A1, A2. Einer der Arme 10b trägt das eigentliche Schweisswerkzeug mit einem Schweissbalken als bearbeitungswirksame Zone 12. Die Niederhalter 14 verlaufen parallel zur Achse A2 des Arms 10b. Die bearbeitungswirksame Zone 12 befindet sich auf der Schwenkachse S. Am von der Schwenkachse S abgewandten Ende des weiteren Arms 10a ist ein Steuerelement 11 in Form einer Steuerrolle drehbar angeordnet. Diese rollt während der Drehung des Körpers 90 an einer Führungskulisse 94 ab. Je nach Form der Führungskulisse 94 wird der Winkel zwischen der Verbindung D-S und der Achse A2 und damit die Schwenkposition des Werkzeugs verändert. Da sich die bearbeiungsaktive Zone auf der Schwenkachse S befindet, ändert sich ihr Abstand von der Drehachse D nicht, sondern nur ihre Orientierung relativ zum Tragarm 92. Die Schweissbalken 12 beschreiben daher eine kreisförmige Umlaufbahn U. Im Bearbeitungsbereich B unterschneidet die Umlaufbahn U die Förderebene E leicht. Durch die Verschwenkbarkeit der Werkzeuge 10 kann erreicht werden, dass die Niederhalter 14 im sowie vor und nach dem Bearbeitungsbereich B senkrecht oder in einer anderen vorgegebenen Orientierung zum. Produkt bzw. der Materialbahn orientiert sind. Da die bearbeitungsaktive Zone 12 auf der Schwenkachse S angeordnet ist, kann die Orientierung eingestellt werden, ohne dass die Bewegungsbahn U der beabeitungsaktiven Zone 12 von einer Kreisbahn abweicht. Eine sehr präzise Kontrolle der Bewegung und Orientierung des Schweisswerkzeugs 10 ist daher möglich. Dies ermöglicht den Einsatz der Vorrichtung insbesondere bei hohen Bearbeitungsgeschwindigkeiten und Kräften.

Die Schweissbalken 12 sind vorzugsweise im Schnitt spitz zulaufend, wodurch die Präzision der Schweissung weiter erhöht wird. Heisses Material wird seitlich verdrängt, wodurch zwei voneinander getrennte Schweissnähte entstehen.

Die in Fig. 1 gezeigte Vorrichtung wird bevorzugt zusammen mit einem Bandförderer eingesetzt, der die Produkte in den Bearbeitungsbereich B fördert und ausserdem als Gegenwerkzeug für den Bearbeitungsvorgang dient. Um eine möglichst präzise Bearbeitung zu erreichen, sollte das Förderband einerseits stets in der Förderebene bleiben, d.h. nicht durchhängen, andererseits aber eine gewisse Nachgiebigkeit bei ungewöhnlich grosser Belastung haben, um ein Verklemmen der Werkzeuge zu verhindern.

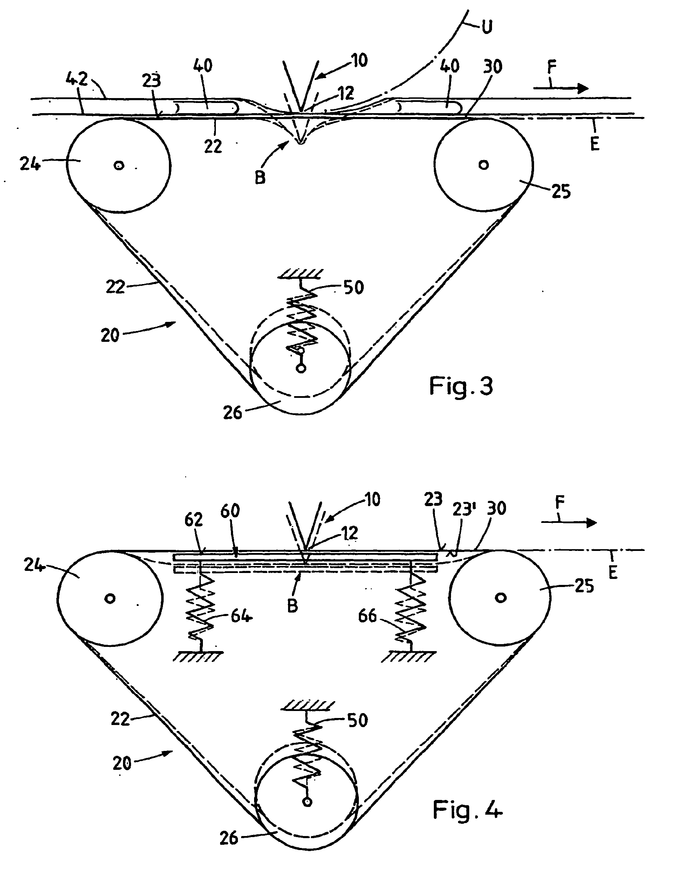

Fig. 3 und 4 illustrieren zwei Varianten einer Fördereinrichtung 20, die diese Anforderungen erfüllt. Gezeigt ist jeweils eine Seitenansicht im Normalzustand (durchgezogene Linien) sowie im Zustand besonderer Belastung (gestrichelt).

Die Fördereinrichtung 20 ist ein Bandförderer mit einem über hier drei Umlenkrollen 24, 25, 26 umgelenkten Trägerband 22. Die Fördereinrichtung 20 fördert Produkte 40 und/oder eine Materialbahn 42 in eine Förderrichtung F. Durch die Umlenkrollen 24, 25, 26 wird das Trägerband 22 so gespannt, dass seine Aussenseite 23 im unbelasteten oder normal belasteten Zustand im dem Werkzeug 10 zugewandten Bereich eine weitgehend ebene Förderauflage 30 für die Produkte 40 und/oder die Materialbahn 42 bildet. Die Förderauflage 30 definiert eine Förderebene E, die tangential zur Umlaufbahn U der Werkzeuge 10 verläuft bzw. von dieser leicht unterschnitten werden kann. Derjenige Bereich, in dem das Werkzeug 10 auf die Produkte 40 oder die Materialbahn 42 einwirken kann, wird als Bearbeitungsbereich B bezeichnet. Durch die Unterschneidung der Förderebene E wird der Bearbeitungsbereich B verlängert. Optional weist das Trägerband 22 eine Dämpfungsschicht auf, z.B. wie in WO-A 2005/118402 beschrieben.

Das Trägerband 22 umfasst bevorzugt eine hitzebeständige, thermisch gut isolierende, reibungsvermindernde Schicht, insbesondere aus Teflon oder einem teflonhaltigen Material. Die Elastizität des Trägerbandes ist gering, um eine auch unter Belastung möglichst ebene Förderauflage 30 zu realisieren.

In Fig. 3 und 4 ist eine der Umlenkrollen, und zwar die nicht zur Festlegung der Förderebene 30 dienende untere Umlenkrolle 26, gefedert gelagert. Die Federung 50 dieser Umlenkrolle 26 dient zum Ausgleich von grösseren Auslenkungen der Förderauflage 30 sowie zum Vorspannen des Trägerbandes 22 gegen Aussen. Kleinere Auslenkungen können beispielsweise bereits durch die oben erwähnte Dämpfungsschicht kompensiert werden.

Eine solche "grössere" Belastung ist in Fig. 3 und 4 stark übertrieben dargestellt skizziert. Dieses wurde beim Stand der Technik durch elastische Verlängerung des Trägerbandes 22 kompensiert. Vorliegend führt die Federung 50 der Umlenkrolle 26 zu einer Bewegung der Umlenkrolle 26 entgegen der Federkraft und damit zur Kompensation der Auslenkung ohne signifikante Längenänderungen des Trägerbandes 22. Dieses kann daher steifer und stabiler als bisher ausgeführt werden.

Mit der Federung 50 ist die untere Umlenkrolle 26 gegen aussen vorgespannt, so dass das Trägerband 22 stets straff ist und besonders im Bearbeitungsbereich B nicht durchhängt.

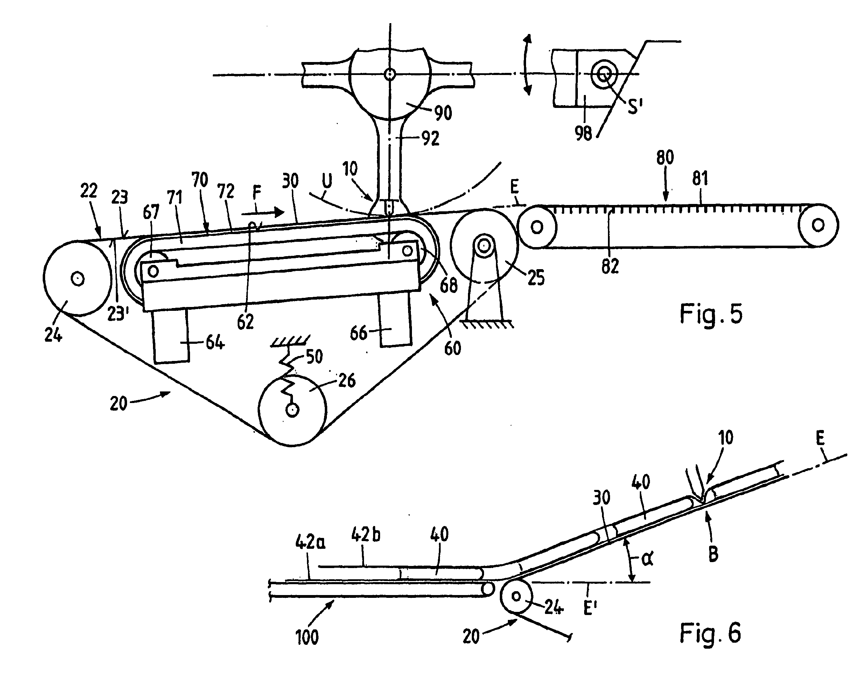

Die Vorrichtung gemäss Fig. 4 weist zusätzlich zu den bereits beschriebenen Komponenten im Bearbeitungsbereich B unterhalb der Förderauflage 30 eine Stützvorrichtung 60 auf. Die Stützvorrichtung 60 hat eine parallel zur Aussenfläche 23 bzw. Förderauflage 30 des Trägerbands 22 verlaufende, unmittelbar an die Innenfläche 23' des Trägerbands 22 angrenzende ebene Stützfläche 62. Diese kann ortsfest oder auch um Rollen umlaufend sein, wie in Fig. 5 gezeigt ist. Die Stützvorrichtung 60 nimmt die Gewichtskraft der Produkte 40 und den Bearbeitungsdruck auf. Die Stützfläche 62 erstreckt sich hier grossflächig vorzugsweise über die gesamte Breite des Trägerbandes und vorzugsweise auch über den grössten Teil der zwischen den beiden Rollen 24, 25 gemessenen Länge der Förderauflage 30.

Die Stützfläche 62 ist über Federungen 64, 66 federnd gelagert, und zwar vorzugsweise so, dass sie als Ganzes in Förderrichtung F und/oder quer dazu verkippen kann. Die Federungen 64, 66 können ebenfalls dazu dienen, das Trägerband 22 gegen Aussen vorzuspannen. Da die Stützfläche 62 grossflächig ist, wird die Förderauflage 30 bei Belastung nicht punktuell verformt, sondern die gesamte Stützfläche 62 wird nach unten gedrückt. Je nach Elastizität des Trägerbandes 22 kann die Federung 50 der unteren Umlenkrolle 26 Auslenkungen zusätzlich ausgleichen; auf diese Federung 50 kann gegebenenfalls jedoch auch verzichtet werden. In jedem Fall bleibt die Förderauflage 30 zumindest im Bearbeitungsbereich weitgehend eben. Dies hat insbesondere bei hohen Verarbeitungsgeschwindigkeiten Vorteile.

Die Stützfläche 62 kann eine Dämpfungsschicht aufweisen, die kleine Auslenkungen, z.B. solche durch den normalen Bearbeitungsdruck, ausgleicht. Die Federung 64, 66 greift dann erst bei grösseren Störungen.

Fig. 5 zeigt eine auf dem Prinzip aus Fig. 4 basierende Bearbeitungsvorrichtung. Im Unterschied zu Fig. 4 ist die Stützvorrichtung 60 mit einem mit dem Trägerband 22 mitlaufenden geschlossenen Stützband 70 ausgestattet. Dieses ist zwischen zwei Umlenkrollen 67, 68 aufgespannt. Sein oberes Trum 71 bildet die Stützfläche 62, die sich unmittelbar unterhalb der Förderauflage 30 befindet.

Die Stützvorrichtung 60 nimmt weitgehend alle Kräfte auf, die durch das Gewicht auf dem Trägerband 22 aufliegender Produkte 40 und die Bearbeitung durch das Werkzeug hervorgerufen werden. Das Werkzeug 10 beschreibt hier eine kreisförmige Umlaufbahn U, die die Förderebene E leicht unterschneidet. Zu Kompensation der damit verbundenen, im normalen Betrieb auftretenden Auslenkungen des Trägerbandes 22 hat das Stirtzband 70 eine komprimierbare Dämpfungsschicht 72. Indem es auf der Dämpfungsschicht aufliegt, die einen gewissen Gegendruck ausübt, wird das Trägerband 22 nur punktuell um das Werkzeug herum verformt, und die Förderauflage 30 bleibt ansonsten flach.

Das Stützband 70 kann gesamthaft aus Dämpfungsmaterial, z.B. Schaumstoff, bestehen, oder aus Schichten aufgebaut sein, von denen nur eine dämpfende Eigenschaften hat. Indem es im Reibschluss durch das Trägerband 22 mitbewegt wird, wird Verschleiss durch Reibung am Trägerband 22 stark vermindert.

Gegenüber der Variante mit einem Trägerband, das eine integrierte Dämpfungsschicht aufweist, hat diese Variante mit Trägerband und Dämpfungsschicht, die voneinander getrennt sind, den Vorteil, dass die mechanischen Eigenschaften von Trägerband und Dämpfungsmaterial unabhängig voneinander ausgewählt und die entsprechenden Komponenten unabhängig voneinander ausgetauscht werden können.

Die Stützvorrichtung 60 ist durch vorliegend vier Stossdämpfer 64, 66, von denen in der Seitenansicht nur zwei sichtbar sind, federnd gelagert. Hierdurch können Auslenkungen, die nicht mehr von der Dämpfungsschicht aufgenommen werden können, kompensiert werden. Die Stützfläche 62 kann in und quer zur Förderrichtung F verkippen. Durch die gefederte Stützfläche 62 wird erreicht, dass die Förderauflage 30 grossflächig abgestützt und somit auch bei grösseren Belastungen weitgehend absatzfrei und eben ist

In einer bevorzugten Ausführung der Erfindung dient die Bearbeitungsvorrichtung zum Herstellen einer Schweissnaht in einem Verpackungsmaterial, insbesondere zum vollständigen Umhüllen von Produkten mit diesem Material. Das Werkzeug 10 ist ein Schweisswerkzeug, insbesondere wie in WO-A 2005/118402 beschrieben, mit dem Schweissnähte in der Materialbahn hergestellt werden. Um ohne einen zusätzlichen Trennschritt auszukommen, werden die umhüllten Produkte 40 mit der Schweissung des Verpackungsmaterials getrennt. Ein Bandförderer 80 ist vorgesehen, der in Förderrichtung F gesehen nach der Fördereinrichtung 20 angeordnet ist und mit einer etwas grösseren Geschwindigkeit als diese fordert. Sein Förderband 81 ist über Saugöffnungen 82 an eine Vakuumquelle angeschlossen, so dass die umhüllten Produkte 40 angesaugt und aufgrund der grösseren Geschwindigkeit und Festhalten durch Vakuum vom Produkte-Material-Schlauch sicher abgelöst werden. Diese Art der Trennung kann mit Vorteil auch bei anderen Schweissvorrichtungen eingesetzt werden.

Ein weiteres vorteilhaftes Merkmal der in Fig. 5 gezeigten Vorrichtung ist die Verschwenkbarkeit des an einem Haltearm 98 gelagerten drehbaren Körpers 90 um eine Achse S'. Der Haltearm 98 ist an einem Tragegestell verschwenkbar gelagert und ist bei einem längeren Betriebshalt der Vorrichtung nach oben wegschwenkbar. Der verschwenkbare Körper 90 hat den Vorteil, dass die Lage der Bewegungsbahn U der bearbeitungswirksamen Zonen 12 des Werkzeugs 10 an wechselnde Vorgaben angepasst werden kann, z.B. unterschiedliche Unterschneidungen der Förderebene E oder unterschiedliche Dicken der Materialbahn 42. Diese Art der Verschwenkbarkeit des Körpers 90 kann mit Vorteil auch bei anderen Bearbeitungsvorrichtungen eingesetzt werden.

Ebenso ist die Fördereinrichtung 20 um die Achse der Rolle 25 einstellbar und verschwenkbar gelagert.

Fig. 6 zeigt eine weitere vorteilhafte Ergänzung zur erfindungsgemässen Vorrichtung, insbesondere bei deren Verwendung zum Verpacken von Produkten40 mit einer Verpackungsmaterialbahn 42. Die Produkte liegen dabei überlicherweise auf einem ersten Materialbahnteil 42a auf und sind von oben mit einem weiteren Materialbahnteil 42b abgedeckt; es kann sich um eine zu einem Schlauch umgeschlagene Folienbahn oder zwei separate Bahnen handeln. Zum Verschweissen von solchen Materialbahnen muss die obere Bahn 42b zur auf dem Förderband aufliegenden unteren Bahn 42a bewegt werden, um die beiden Bahnen 42a, 42b zu verschweissen. Damit dies möglich ist, benötigt die obere Bahn 42b mehr Länge.

Hierzu ist die Förderebene E der Fördereinrichtung 20 hier gegenüber der Förderebene E' eines vorgelagerten Zuförderers 100 um einen Winkel α von 2-15°, insbesondere 5-10°, (in Förderrichtung aufsteigend) geneigt. Hierdurch erhält der obere Materialbahnteil 42b im Bearbeitungsbereich B etwas Spiel, und die Bearbeitung kann ohne Überdehnung der Bahn erfolgen. Dieses Merkmal ist mit Vorteil auch bei anderen Bearbeitungsvorrichtungen einsetzbar, z.B. solchen mit anders gelagerten Werkzeugen.

## Patentansprüche

1. Vorrichtung zur Bearbeitung von nacheinander in einer Förderrichtung (F) geförderten flachen Gegenständen (40), insbesondere Druckereiprodukten, und/oder einer kontinuierlich geförderten Materialbahn (42), insbesondere zum Verschweissen einer Materialbahn, wobei die Vorrichtung wenigstens einen um eine Drehachse (D) drehbaren starren Körper (90) und wenigstens ein an diesem Körper (90) befestigtes, durch Drehung des Körpers (90) entlang einer Umlaufbahn (U) bewegbares Werkzeug (10) mit einer bearbeitungsaktiven Zone (12) aufweist, insbesondere ein Schweisswerkzeug mit einem Schweissbalken, wobei das Werkzeug um eine Schwenkachse (S) schwenk- oder drehbar am Körper (90) befestigt ist und wobei die Schwenkposition des Werkzeugs mittels einer ortsfesten Steuerkulisse (94) und einem mit der Steuerkulisse (94) zusammenwirkenden, mit dem Werkzeug verbundenen Steuerelement (11) in Abhängigkeit von der Drehlage des starren Körpers einstellbar ist, wobei die Schwenkachse (S) einen konstanten Abstand von der Drehachse (D) hat, die bearbeitungswirksame Zone (12) des Werkzeugs (10) auf der Schwenkachse (S) angeordnet ist, und das Steuerelement (11) von der bearbeitungswirksamen Zone (12) beabstandet ist.

2. Vorrichtung nach Anspruch 1, **dadurch gekennzeichnet, dass** die Schwenkposition des Werkzeugs (10) relativ zum starren Körper (90) durch die Steuerkulisse so veränderbar ist, dass die Ausrichtung des Werkzeugs (10) im Raum zumindest in einem Teilbereich der Umlaufbahn (U) im wesentlichen konstant ist.

3. Vorrichtung nach Anspruch 1 oder 2, **dadurch gekennzeichnet, dass** das Steuerelement über einen Hebelarm mit der bearbeitungswirksamen Zone (12) des Werkzeugs (10) starr gekoppelt ist.

4. Vorrichtung nach einem der vorangegangenen Ansprüche, **gekennzeichnet durch** eine Fördereinrichtung (20) zur Förderung der Gegenstände (40) und/oder Materialbahn (42), wobei die Fördereinrichtung (20) wenigstens ein umlaufend angetriebenes Trägerband (22) und Umlenkmittel (24, 25, 26) zu dessen Umlenkung aufweist, wobei eine Förderauflage (30) **durch** eine dem wenigstens einen Werkzeug (10) zugewandte Aussenfläche (23) des Trägerbands (22) gebildet ist und zur Bearbeitung in einem Bearbeitungsbereich (B) wenigstens indirekt mit dem Werkzeug (10)zusammenzuwirken imstande ist.

5. Vorrichtung nach Anspruch 4, **dadurch gekennzeichnet, dass** wenigstens eines der Umlenkmittel (24, 25, 26) für das Trägerband (22) federnd gelagert ist.

6. Vorrichtung nach Anspruch 4 oder 5, **dadurch gekennzeichnet, dass** das Trägerband (22) über wenigstens drei Umlenkmittel (24, 25, 26),vorzugsweise Umlenkrollen, geführt ist, wobei zwei der Umlenkmittel (24, 25) ortsfest gelagert sind und das Trägerband (22) zwischen diesen aufgespannt ist, so dass die Förderauflage (30) im unbelasteten Zustand im wesentlichen eben ist, und wobei ein weiteres Umlenkmittel (26) federnd gelagert ist.

7. Vorrichtung nach Anspruch 6, **dadurch gekennzeichnet, dass** die Federung des federnd gelagerten Umlenkmittels (26) so gewählt ist, dass es eine durch Krafteinwirkung durch das Werkzeug verursachte Auslenkung des Trägerbandes (22) derart auszugleichen imstande ist, dass sich die Gesamtlänge des Trägerbandes (22) nicht wesentlich ändert.

8. Vorrichtung nach einem der Ansprüche 4-7, **dadurch gekennzeichnet, dass** Trägerband (22) eine temperaturbeständige Beschichtung aufweist.

9. Vorrichtung nach einem der vorangegangenen Ansprüche 4-8, **dadurch gekennzeichnet, dass** unterhalb der Förderauflage (30) eine Stützvorrichtung (60) angeordnet ist, die eine parallel zur Aussenfläche (23) des Trägerbands (22) verlaufende, unmittelbar an die Innenfläche (23') des Trägerbands (22) angrenzende Stützfläche (62) aufweist.

10. Vorrichtung nach Anspruch 9, **dadurch gekennzeichnet, dass** die Stützvorrichtung (60) wenigstens ein über weitere Umlenkmittel (67, 68), vorzugsweise Umlenkrollen, umlaufendes geschlossenes Stützband (70) umfasst, wobei die Stützfläche (62) durch dessen oberes Trum (71) gebildet ist.

11. Vorrichtung nach Anspruch 10, **dadurch gekennzeichnet, dass** das Stützband (70) eine Dämpfungsschicht (72) umfasst, insbesondere eine Schaumstoffschicht.

12. Vorrichtung nach einem der Ansprüche 9-11, **dadurch gekennzeichnet, dass** die Stützvorrichtung (60) federnd gelagert ist, vorzugsweise derart, dass ein Verkippen der Stützfläche (62) in und quer zur Förderrichtung (F) möglich ist.

13. Vorrichtung nach einem der Ansprüche 4-12, **dadurch gekennzeichnet, dass** die Umlaufbahn (U) eine im unbelasteten Zustand durch die Förderauflage (30) definierte Förderebene (E) schneidet.

14. Vorrichtung nach einem der vorangegangenen Ansprüche, **gekennzeichnet durch** eine weitere Fördereinrichtung (100), die in Förderrichtung vor der Fördereinrichtung (20) angeordnet ist, wobei die Förderauflage (30) der Fördereinrichtung (20) in einem Winkel von 2-30° zu einer Förderebene (E') der weiteren Fördereinrichtung (100) angeordnet ist.

15. Vorrichtung nach einem der vorangegangenen Ansprüche, **gekennzeichnet durch** eine Wegfördereinrichtung (80), die in Förderrichtung nach der Fördereinrichtung (20) angeordnet ist und die die bearbeiteten Produkte bzw. die bearbeitete Materialbahn mit einer grösseren Fördergeschwindigkeit als die Fördereinrichtung fördert und vorzugsweise mittels Saugluft fixiert.

## Claims

1. An apparatus for processing flat articles (40), in particular printed products, conveyed one after the other in a conveying direction (F) and/or for processing a continuously conveyed material web (42), in particular for welding a material web, wherein the apparatus comprises at least one rigid body (90), which can be rotated about an axis of rotation (D), and at least one tool (10), which is fastened on this body (90), and which can be moved along a circulatory path (U) by virtue of the body (90) being rotated and which has a processing zone (12), in particular a welding tool with a welding bar, wherein the tool is fastened on the body (90) such that it can be rotated or pivoted about a pivot axis (S), and wherein the pivoting position of the tool can be adjusted, in dependence on the rotary position of the rigid body, by means of a fixed-location control track (94) and a control element (11) which interacts with the control track (94) and is connected to the tool, wherein the pivot axis (S) is at a constant distance from the axis of rotation (D), the processing zone (12) of the tool (10) is arranged on the pivot axis (S), and the control element (11) is spaced apart from the processing zone (12).

2. The apparatus according to claim 1, **characterized in that** it is possible to change the pivoting position of the tool (10) relative to the rigid body (90) by the control track such that the orientation of the tool (10) in space is essentially constant at least in a sub-region of the circulatory path (U).

3. The apparatus according to claim 1 or 2, **characterized in that** the control element is coupled rigidly to the processing zone (12) of the tool (10) via a lever arm.

4. The apparatus according to one of the preceding claims, **characterized by** a conveying arrangement (20) for conveying the articles (40) and/or material web (42), wherein the conveying arrangement (20) comprises at least one carrier belt (22), which is driven in circulation, and deflecting means (24, 25, 26) for deflecting the same, wherein a conveying support (30) is formed by an outer surface (23) of the carrier belt (22), this outer surface being directed toward the at least one tool (10), and for processing purposes, in a processing region (B), is capable of interacting at least indirectly with the tool (10).

5. The apparatus according to claim 4, **characterized in that** at least one of the deflecting means (24, 25, 26) for the carrier belt (22) is mounted resiliently.

6. The apparatus according to claim 4 or 5, **characterized in that** the carrier belt (22) is guided over at least three deflecting means (24, 25, 26), preferably deflecting rollers, wherein two of the deflecting means (24, 25) are mounted at a fixed location and the carrier belt (22) is tensioned between the same, so that the conveying support (30), in the non-loaded state, is essentially planar, and wherein a further deflecting means (26) is mounted resiliently.

7. The apparatus according to claim 6, **characterized in that** the resilient mounting of the resiliently mounted deflecting means (26) is selected such that the latter is capable of compensating for deflection of the carrier belt (22) caused by forces applied by the tool, and this compensation means that the overall length of the carrier belt (22) does not change significantly.

8. The apparatus according to one of claims 4 to 7, **characterized in that** the carrier belt (22) comprises a temperature-resistant coating.

9. The apparatus according to one of preceding claims 4 to 8, **characterized in that** the conveying support (30) has arranged beneath it a supporting means (60) which comprises a supporting surface (62) running parallel to the outer surface (23) of the carrier belt (22) and directly adjacent to the inner surface (23') of the carrier belt (22).

10. The apparatus according to claim 9, **characterized in that** the supporting means (60) comprises at least one circular continuous supporting belt (70) which circulates over further deflecting means (67, 68), preferably deflecting rollers, wherein the supporting surface (62) is formed by the top strand (71) of this supporting belt.

11. The apparatus according to claim 10, **characterized in that** the supporting belt (70) comprises a damping layer (72), in particular a foam layer.

12. The apparatus according to one of claims 9 to 11, **characterized in that** the supporting means (60) is mounted resiliently, preferably such that the supporting surface (62) can be tilted in, and transversely to, the conveying direction (F).

13. The apparatus according to one of claims 4 to 12, **characterized in that** the circulatory path (U) intersects a conveying plane (E) which, in the non-loaded state, is defined by the conveying support (30).

14. The apparatus according to one of the preceding claims, **characterized by** a further conveying arrangement (100), which is arranged upstream of the conveying arrangement (20), as seen in the conveying direction, wherein the conveying support (30) of the conveying arrangement (20) is arranged at an angle of 2 to 30° in relation to a conveying plane (E') of the further conveying arrangement (100).

15. The apparatus according to one of the preceding claims, **characterized by** a removal arrangement (80) which is arranged downstream of the conveying arrangement (20), as seen in the conveying direction, and which conveys the processed products or the processed material web at a greater conveying speed than the conveying arrangement and which fixes the same preferably by means of suction air.

## Revendications

1. Dispositif pour le traitement d'articles plats (40) convoyés l'un après l'autre dans une direction de convoyage (F), en particulier des produits d'imprimerie, et/ou un pan de matériau (42) convoyé en continu, en particulier pour le soudage d'un pan de matériau, dans lequel le dispositif présente au moins un corps rigide (90) qui peut tourner autour d'un axe de rotation (D) et au moins un outil (10) avec une zone à usinage actif qui est fixé sur ce corps (90) et qui peut être déplacé par la rotation du corps (90) le long d'une trajectoire de circulation (U), en particulier un outil de soudage muni d'une poutre de soudage, dans lequel l'outil est fixé avec faculté de pivotement autour d'un axe de pivotement (S) sur le corps (90) ou avec faculté de rotation sur le corps (90) et dans lequel la position de pivotement de l'outil peut être ajustée au moyen d'une coulisse de commande stationnaire (94) et au moyen d'un élément de commande (11) qui est relié avec l'outil et qui est en interaction avec la coulisse de commande (94), dans lequel l'axe de pivotement (S) est agencé à une distance constante envers l'axe de pivotement (D) et dans lequel la zone à usinage actif (12) de l'outil (10) est agencée sur l'axe de pivotement (S) et dans lequel l'élément de commande (11) est agencé à distance de la zone à usinage actif (12).

2. Dispositif selon la revendication 1, **caractérisé en ce que** la position de pivotement de l'outil (10) par rapport au corps rigide (90) peut être modifiée par la coulisse de commande de telle sorte que l'orientation de l'outil (10) dans l'espace est constante au moins dans une zone partielle de la trajectoire de circulation (U).

3. Dispositif selon l'une ou l'autre des revendications 1 et 2, **caractérisé en ce que** l'élément de commande est accouplé de manière rigide à la zone à usinage actif (12) par l'intermédiaire d'un bras de levier.

4. Dispositif selon l'une des revendications précédentes, **caractérisé par** un dispositif de convoyage (20) pour le convoyage des objets (40) et/ou du pan de matériau (42), dans lequel le dispositif de convoyage (20) présente au moins une bande portante (22) qui est entraînée en périphérie et des moyens de renvoi (24, 25, 26) pour son renvoi, dans lequel un support de convoyage (30) est formé par une surface extérieure (23) de la bande portante (22) tournée vers le au moins un outil (10) et est en mesure d'interagir au moins indirectement avec l'outil (10) pour le traitement dans une zone de traitement (B).

5. Dispositif selon la revendication 4, **caractérisé en ce qu'**au moins un des moyens de renvoi (24, 25, 26) est soutenu avec suspension pour la bande portante (22).

6. Dispositif selon l'une ou l'autre des revendications 4 et 5, **caractérisé en ce que** la bande portante (22) est guidée par au moins trois moyens de renvoi (24, 25, 26), de préférence des poulies de renvoi, et dans lequel deux des moyens de renvoi (24, 25) sont montés de manière stationnaire et dans lequel la bande portante (22) est tendue entre ceux-ci de telle sorte que le support de convoyage (30) est sensiblement plan dans l'état non chargé et dans lequel un autre moyen de renvoi (26) est monté avec suspension.

7. Dispositif selon la revendication 6, **caractérisé en ce que** la suspension du moyen de renvoi (26) monté avec suspension est choisie de telle sorte qu'elle est en mesure de compenser une déviation provoquée par une influence de force par l'outil de la bande portante (22) et **en ce que** la longueur totale de la bande portante (22) ne se modifie pas essentiellement.

8. Dispositif selon l'une des revendications 4 à 7, **caractérisé en ce que** la bande portante (22) présente une enduction qui résiste aux températures.

9. Dispositif selon des revendications précédentes 4 à 8, **caractérisé en ce que**, en dessous du support de convoyage (30), un dispositif de soutien (60) est agencé et lequel présente une surface de soutien (62) qui s'étend parallèlement à la surface extérieure (23) de la bande portante (22) et qui vient se limiter directement à la surface intérieure (23') de la bande portante (22).

10. Dispositif selon la revendication 9, **caractérisé en ce que** le dispositif de soutien (60) comporte au moins une bande fermée de soutien (70) qui circule en périphérie sur au moins un autre moyen de renvoi (67, 68), de préférence des poulies de renvoi, et dans lequel la surface de soutien (62) est formée par son brin supérieur (71).

11. Dispositif selon la revendication 10, **caractérisé en ce que** la bande de soutien (70) comporte une couche d'amortissement (72) en particulier une couche de mousse.

12. Dispositif selon l'une des revendications 9 à 11, **caractérisé en ce que** le dispositif de soutien (60) est monté avec suspension, de préférence de telle sorte qu'un basculement de la surface de soutien (62) est possible dans et perpendiculairement à la direction de convoyage (F).

13. Dispositif selon l'une des revendications 4 à 12, **caractérisé en ce que** la trajectoire de circulation (U) coupe un plan de convoyage défini (E) dans l'état non chargé par le dispositif de convoyage (30).

14. Dispositif selon l'une des revendications précédentes, **caractérisé en ce qu'**un autre dispositif de convoyage (100) qui est agencé dans la direction de convoyage devant le dispositif de convoyage (20) et dans lequel le support de convoyage (30) du dispositif de convoyage (20) est agencé sous un angle de 2 à 30° par rapport à un plan de convoyage (E') de l'autre dispositif de convoyage (100).

15. Dispositif selon des revendications précédentes, **caractérisé par** un dispositif de convoyage et d'éloignement (80) qui est agencé dans la direction de convoyage après le dispositif de convoyage (20) et qui fixe les produits traités ou le pan de matériau traité avec une plus grande vitesse de convoyage que le dispositif de convoyage convoie et de préférence au moyen d'air d'aspiration.
